Europäisches Patentamt

European Patent Office

Office européen des brevets

(11) Numéro de publication : **0 341 149 B1**

# (12) FASCICULE DE BREVET EUROPEEN

(45) Date de publication du fascicule du brevet :
**11.03.92 Bulletin 92/11**

(51) Int. Cl.$^5$ : **F16N 19/00, G01F 13/00,
B67D 5/34**

(21) Numéro de dépôt : **89401240.0**

(22) Date de dépôt : **02.05.89**

(54) **Dispositif de compensation par déversement d'un liquide en quantité dosée et son application au réapprovisionnement d'un circuit hydraulique.**

(30) Priorité : **06.05.88 FR 8806169**

(43) Date de publication de la demande :
**08.11.89 Bulletin 89/45**

(45) Mention de la délivrance du brevet :
**11.03.92 Bulletin 92/11**

(84) Etats contractants désignés :
**DE GB IT NL**

(56) Documents cités :
**EP-A- 0 141 599
DE-C- 197 572
FR-A- 448 275
FR-A- 900 088
GB-A- 1 084 884
US-A- 2 551 380
US-A- 2 722 286
US-A- 4 107 984**

(73) Titulaire : **FRAMATOME
Tour Fiat 1, Place de la Coupole
F-92400 Courbevoie (FR)**

(72) Inventeur : **Hubert, Philippe
29 rue Desaix
F-69003 Lyon (FR)**
Inventeur : **Martin, Eric
8 avenue Salvador Allende
F-69100 Villeurbanne (FR)**

(74) Mandataire : **Bouget, Lucien et al
Cabinet Lavoix 2, Place d'Estienne d'Orves
F-75441 Paris Cédex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

**Description**

L'invention concerne un dispositif de déversement d'un liquide en quantité dosée, à partir d'un récipient principal comportant un trop-plein et en fonction d'une quantité de liquide de fuite perdue par une installation hydraulique. En particulier, le dispositif suivant l'invention peut être utilisé pour effectuer le réapprovisionnement en liquide d'une pompe ou de toute machine tournante présentant un débit de fuite.

Il peut être nécessaire d'effectuer le réapprovisionnement en liquide d'un circuit hydraulique dans lequel la quantité totale de liquide doit être maintenue parfaitement constante.

Il en est ainsi par exemple des pompes telles que les pompes utilisées dans les réacteurs nucléaires qui présentent une fuite au niveau des garnitures d'étanchéité de leur partie tournante. Dans ce cas, il est nécessaire de récupérer soigneusement l'huile polluée venant de la fuite et de remplacer cette huile polluée par un volume d'huile neuve strictement égal ou équivalent.

Il est souhaitable d'effectuer le réapprovisionnement de la pompe en huile neuve, de manière automatique, sans avoir à arrêter la pompe. Des interventions humaines nécessiteraient en effet d'arrêter la pompe ou de manière plus générale l'installation hydraulique, ce qui accroît la durée des périodes d'indisponibilité du matériel.

Il est possible d'envisager l'utilisation de circuits de réapprovisionnement comportant des moyens d'évaluation de la quantité d'huile dans la pompe et des moyens de dosage et de réapprovisionnement faisant intervenir des composants hydrauliques et électro-hydrauliques tels que des pompes, des vannes et des électrovannes ainsi que des moyens de mesure tels que des débitmètres, des capteurs de niveau ou des capteurs de pression.

De tels dispositifs sont complexes et leur fonctionnement aussi bien que leur réglage peuvent être délicats.

Le document FR-A-448 275 décrit un dispositif de distribution d'un liquide désinfectant comportant un récipient principal, muni d'un trop-plein, contenant un liquide désinfectant dont le déversement goutte à goutte par le trop-plein est provoqué par l'immersion progressive d'un récipient secondaire flottant dans ce liquide désinfectant. L'immersion progressive de ce récipient secondaire est obtenue en introduisant goutte à goutte dans celui-ci un liquide moteur pouvant être de l'eau. L'objet de ce brevet n'est pas un dispositif permettant de compenser automatiquement une fuite de liquide dans une installation hydraulique.

On ne connaissait pas jusqu'ici de dispositif de prélèvement ou de pompage de structure simple permettant de prélever un liquide en quantité parfaitement dosée dans un récipient, en fonction d'une quantité de liquide perdue par une installation hydraulique.

Le but de l'invention est donc de proposer un dispositif de déversement d'un premier liquide en quantité dosée comportant un récipient principal contenant le premier liquide et comprenant un trop-plein et un récipient secondaire, dans lequel on introduit un second liquide, monté librement mobile dans la direction verticale à l'intérieur du récipient principal, flottant dans le premier liquide, qui soit d'une structure et d'un fonctionnement simples et totalement automatique, ne faisant pas intervenir de composants hydrauliques et qui permette de compenser automatiquement une fuite de liquide dans une installation hydraulique.

Dans ce but, le dispositif suivant l'invention est caractérisé par le fait que le premier liquide est un liquide de réapprovisionnement d'une installation hydraulique présentant une fuite, que le second liquide est le liquide de fuite de l'installation hydraulique, le volume intérieur du récipient secondaire étant en communication avec une conduite d'évacuation de ce liquide de fuite, le récipient secondaire étant immergé dans le liquide du récipient principal sur une hauteur dépendant de la quantité de liquide de fuite recueillie par le récipient secondaire, l'immersion du récipient secondaire provoquant le déversement par le trop-plein d'une quantité dosée de liquide de réapprovisionnement dans l'installation hydraulique.

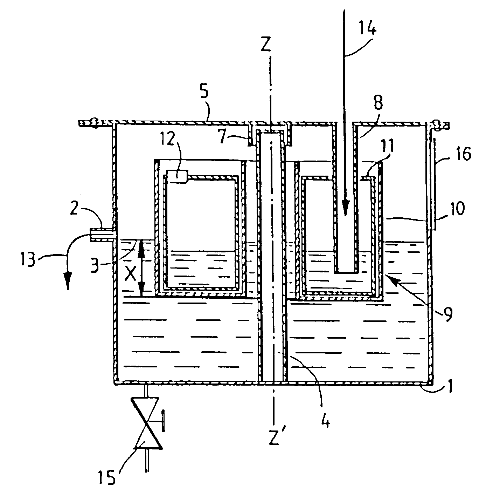

Afin de bien faire comprendre l'invention, on va maintenant décrire, à titre d'exemple non limitatif, en se référant à la figure unique jointe en annexe, un mode de réalisation du dispositif suivant l'invention utilisé pour le réapprovisionnement en huile d'une pompe dont les garnitures d'étanchéité des parties tournantes présentent des fuites.

La figure unique est une vue en coupe du dispositif de déversement associé à la pompe.

Le dispositif représenté sur la figure comporte un récipient principal 1 comprenant un ajutage de déversement 2 traversant sa paroi et constituant un trop-plein pour un liquide contenu dans le récipient 1.

Le récipient 1 renferme de l'huile neuve dont le niveau 3 s'établit en concordance avec la partie inférieure de l'ajutage de déversement 2. Une colonne verticale 4 est fixée sur le fond du récipient 1 qui est fermé à sa partie supérieure par un convercle 5 venant en appui sur l'extrémité supérieure de la paroi latérale du récipient 1.

Sous le couvercle 5 et en position centrale est fixée une manchette 7 venant coiffer la partie supérieure de la colonne verticale 4 dont elle assure le maintien.

Le couvercle 5 supporte également une conduite tubulaire verticale 8 montée traversante par rapport au couvercle.

A l'intérieur du récipient 1 est monté un ensemble librement mobile dans la direction verticale et constituant un récipient secondaire recevant l'huile de fuite provenant de la pompe par l'intermédiaire de la conduite 8.

Le récipient secondaire 9 est constitué par un récipient flottant externe 10 ouvert à sa partie supérieure comprenant lui-même un récipient d'évacuation 11 entièrement fermé dans lequel pénètre avec du jeu la conduite 8 mettant en communication le volume interne du récipient 11 avec l'évacuation de l'huile de fuite de la pompe.

Le récipient flottant externe 10 est engagé par sa partie centrale creuse autour de la colonne 4 avec un certain jeu lui permettant des déplacements dans la direction verticale. Le récipient d'évacuation 11 est fixé à l'intérieure du récipient externe 10 et le conduit 8 est engagé avec jeu dans une ouverture traversant sa paroi, de façon que l'ensemble du récipient secondaire soit susceptible de se déplacer dans la direction verticale à l'intérieur du récipient principal 1 sans pouvoir tourner autour de l'axe vertical ZZ' de la colonne 4 et du récipient 1.

Le récipient flottant externe 10 qui plonge dans le liquide remplissant le récipient principal 1 jusqu'au niveau 3 constitue un vase flotteur soutenu par le liquide à l'intérieur du récipient 1.

Le récipient d'évacuation interne 11 comporte un bouchon de vidange 12 pour évacuer l'huile polluée venant par le conduit 8 et recueillie dans ce récipient interne.

Il est bien évident que le récipient flottant 10 est immergé, à l'intérieur du liquide du récipient 1, sur une hauteur X dépendant de la masse totale du récipient flottant et de la quantité d'huile polluée recueillie dans le récipient d'évacuation 11.

Il est bien évident également que lorsque le récipient flottant 10 s'enfonce à l'intérieur du liquide contenu dans le récipient 1, le niveau 3 a tendance à remonter et du liquide contenu dans ce récipient 1 est déversé par le trop-plein 2 (flèche 13).

La quantité d'huile neuve déversée par le trop-plein 2 est strictement égale ou proportionnelle à la quantité d'huile polluée parvenant dans le récipient d'évacuation 11 par la conduite 8 (flèche 14).

Le récipient principal 1 comporte une vanne de vidange 15 montée dans le fond du récipient.

On va maintenant établir la relation existante entre le volume V1 de liquide dans le récipient d'évacuation (huile polluée) et le volume V2 du liquide se déversant par le trop-plein 2 (huile neuve).

Pour établir une relation plus générale, on supposera que le liquide qui s'écoule dans le récipient d'évacuation 11 est différent du liquide contenu dans le récipient principal 1.

Dans les relations données ci-dessous, on désigne par :

$\mu 1$ la masse volumique du liquide qui s'écoule dans le récipient d'évacuation 11,

$\mu 2$ la masse volumique du liquide contenu dans le récipient principal 1,

g l'accélération de la pesanteur,

M la masse totale du récipient flottant 10 et du récipient d'évacuation 11, hors masse de liquide,

S1 la surface de poussée du récipient flottant 10,

V1 le volume de liquide recueilli dans le récipient d'évacuation 11,

V2 le volume de liquide déversé par le trop-plein 2,

X la hauteur d'immersion du récipient secondaire 9, c'est-à-dire la distance verticale entre le fond du récipient flotteur 10 et le niveau 3 du trop-plein 2.

L'égalité entre le poids total du récipient secondaire et la poussée d'Archimède conduit à écrire la relation suivante :

$$S1\mu 2gX = Mg + V1\mu 1g$$

soit

$$S1\mu 2X = M + V1\mu 1$$

ou encore

$$X = M/(S1\mu 2) + (V1\mu 1)/(S1\mu 2).$$

Si on choisit comme conditions initiales celles qui correspondent au début de fonctionnement de la pompe, le récipient d'évacuation 11 étant vide, ces conditions initiales peuvent s'exprimer de la manière suivante :

$$V1 = 0 \text{ d'où} : X = X0 = M/S1\mu 2,$$

en désignant par X0 la hauteur d'immersion initiale.

En désignant par X1 l'accroissement de la hauteur d'immersion par suite de l'écoulement de liquide dans le récipient d'évacuation 11, on peut établir les relations suivantes :

$$X = X0 + X1$$

ou

$$X = X0 + V1/S1 \times \mu 1/\mu 2,$$

ou encore

$$X1 = V1/S1 \times \mu 1/\mu 2.$$

L'introduction d'un volume de liquide V1 dans le récipient d'évacuation 11 conduit donc à une immersion du récipient flottant 10 sur une hauteur X1 donnée par la relation indiquée ci-dessus.

Le volume V2 de liquide du récipient principal 1 qui se déverse par le trop-plein 2 est donc :

$$V2 = X1S1 = V1/S1\mu 1/\mu 2S1$$

ou encore

$$V2 = V1 \times \mu 1/\mu 2.$$

Dans le cas où $\mu 1 = \mu 2$ et en particulier dans le cas où le liquide s'écoulant dans le vase d'évacuation est identique au liquide de remplacement du récipient principal, alors V1 = V2.

Le volume d'huile neuve déversé par le trop-plein 2 est alors parfaitement identique au volume d'huile polluée évacué par les fuites de la pompe.

Il suffit alors d'introduire dans la pompe la quantité V2 d'huile de remplacement pour maintenir la quantité totale d'huile dans la pompe parfaitement constante.

Le dispositif suivant l'invention permet donc de respecter parfaitement l'une des astreintes de sûreté de l'installation de pompage qui concerne le maintien à une valeur constante de la quantité de liquide de lubrification dans l'installation de pompage. Il est en effet interdit d'ajouter plus de liquide de lubrification que l'on a évacué de liquide usagé.

Il est possible de fournir directement le lubrifiant à la pompe à partir du trop-plein 2, par déversement ou refoulement, ce réapprovisionnement de la pompe en huile de lubrification pouvant être effectué soit en continu soit par petites doses avec un faible intervalle de temps entre deux doses.

Il est également possible de stocker une certaine dose d'huile de remplacement neuve et de la refouler dans la pompe en utilisant un dispositif d'injection ou de pompage.

Le récipient principal comporte, dans sa paroi, un hublot étanche gradué 16 monté latéralement et permettant de repérer la position de la partie supérieure du récipient secondaire 9 et donc de mesurer visuellement la hauteur d'immersion X. On peut ainsi obtenir une information numérique relativement précise sur les quantités d'huile de fuite évacuées et sur la quantité d'huile neuve introduite dans la pompe.

Le réapprovisionnement en huile neuve de la pompe peut se poursuivre jusqu'au moment où le fond du récipient flottant 10 vient reposer sur le fond du récipient principal 1. La hauteur du récipient flottant 10 est supérieure à la distance verticale entre le fond du récipient principal 1 et le niveau 3 du trop-plein 2, si bien que dans la position basse du récipient flottant 10, l'huile neuve contenue dans le récipient principal 1 ne peut venir à l'intérieur du récipient flottant et a fortiori en contact avec l'huile polluée contenue dans le récipient d'évacuation fermé 11.

La position basse du récipient flottant 10 peut être repérée, par exemple grâce à un signal lumineux déclenché par un contact électrique associé au récipient flottant 10.

On arrête alors le fonctionnement de la pompe et on réalise les opérations de maintenance par démontage du couvercle 5 du récipient 1. Le récipient flottant 10 reste en place dans le récipient 1, seul est extrait le récipient d'évacuation 11 pour évacuer en atelier l'huile polluée en ouvrant le bouchon 12.

Le récipient d'évacuation 11 est ensuite remis en place dans le récipient flottant 10 dont on refait le niveau, par exemple en ouvrant une vanne faisant communiquer le récipient principal avec un circuit d'approvisionnement en huile neuve.

Il est à noter que pendant le remplacement de l'huile polluée par l'huile neuve, l'huile polluée s'écoule à l'intérieur d'un récipient fermé et que les opérateurs chargés de l'installation de pompage évitent ainsi tout contact avec cette huile polluée qui peut être dangereuse au toucher.

Le réapprovisionnement en huile neuve est ainsi effectué de manière totalement automatique pendant le fonctionnement de la pompe.

Le dispositif suivant l'invention permet non seulement de récupérer l'huile polluée mais encore de mesurer le volume d'huile de fuite évacué. Le dispositif permet également de déterminer le volume d'huile neuve introduit dans la pompe en remplacement de l'huile usagée.

Le dispositif assure également le stockage de l'huile neuve utilisable pendant le fonctionnement de la pompe. A cet effet, la capacité du récipient principal et la capacité du récipient secondaire de-vront être calculées de façon à permettre un fonctionnement pendant une durée suffisante sans intervention humaine.

Le dispositif permet également d'éviter tout risque d'erreur de dosage, bien qu'il soit très simple et d'un coût limité.

La fiabilité du dispositif est très satisfaisante puisqu'on évite l'utilisation de dispositifs de contrôle, de commande et de régulation, de dispositifs de mesure ou de tout moyen électromécanique tel que des motopompes, des électrovannes ou des débitmètres qui sont susceptibles de se détériorer ou de présenter des défaillances.

Le dispositif ne nécessite pas de source d'énergie pour son fonctionnement, puisqu'il fonctionne uniquement par gravité.

De même, l'entretien d'un dispositif selon l'invention ne nécessite que des interventions tout-à-fait exceptionnelles, ce qui permet d'économiser sur le temps d'intervention et le coût des pièces de rechange.

L'invention ne se limite pas au mode de réalisation qui a été décrit.

C'est ainsi qu'on peut imaginer des récipients de forme quelconque et des structures différentes assurant le montage et le guidage du récipient secondaire à l'intérieur du récipient principal.

Le récipient secondaire peut être réalisé en deux parties (un récipient flottant et un récipient d'évacuation) comme décrit plus haut ou encore en une seule partie, le récipient flottant et le récipient d'évacuation étant constitués par le même récipient.

Le liquide contenu dans le récipient principal peut être identique au liquide évacué ou être constitué par un liquide différent. Dans ce cas, il est possible de remplacer une certaine masse du premier liquide par une masse égale du second liquide dans l'installation hydraulique.

Le dispositif suivant l'invention, dans le cas où il est associé à une installation de pompage, peut être relié à la pompe d'une manière quelconque de façon à récupérer les fuites des garnitures de la pompe par la conduite 8 et à réapprovisionner la pompe en huile neuve du récipient principal, par l'intermédiaire de la conduite de trop-plein 2.

L'invention s'applique dans tous les cas où l'on désire réaliser une certaine compensation de liquide dans une installation hydraulique ou pour effectuer le réapprovisionnement en lubrifiant d'une machine tournante quelconque.

## Revendications

1. Dispositif de déversement d'un premier liquide en quantité dosée comportant un récipient principal (1) contenant le premier liquide et comprenant un trop-plein (2) et un récipient secondaire (9), dans lequel on introduit un second liquide, monté librement mobile dans la direction verticale à l'intérieur du récipient principal (1), flottant dans le premier liquide, caractérisé par le fait que le premier liquide est un liquide de réapprovisionnement d'une installation hydraulique présentant une fuite, que le second liquide est le liquide de fuite de l'installation hydraulique, le volume intérieur du récipient secondaire étant en communication avec une conduite d'évacuation (8) de ce liquide de fuite, le récipient secondaire étant immergé dans le liquide du récipient principal sur une hauteur (X) dépendant de la quantité de liquide de fuite recueillie par le récipient secondaire (9), l'immersion du récipient secondaire (9) provoquant le déversement par le trop-plein (2) d'une quantité dosée de liquide de réapprovisionnement dans l'installation hydraulique.

2. Dispositif suivant la revendication 1, caractérisé par le fait que le récipient secondaire (9) est constitué par un récipient flottant (10) externe ouvert à sa partie supérieure et un récipient d'évacuation (11) interne fermé, disposé à l'intérieur du récipient flottant (10) et en communication avec la conduite d'évacuation (8).

3. Dispositif de déversement suivant l'une quelconque des revendications 1 et 2, caractérisé par le fait que le récipient secondaire (9) est disposé autour d'une colonne verticale (4) solidaire du récipient principal (1).

4. Dispositif suivant l'une quelconque des revendications 1 à 3, caractérisé par le fait que la conduite (8) est une conduite verticale traversant la paroi du récipient secondaire (9) par une ouverture.

5. Dispositif suivant l'une quelconque des revendications 1 à 4, caractérisé par le fait que le récipient (1) comporte un couvercle amovible (5) traversé par la conduite d'évacuation (8) et supportant cette conduite (8).

6. Dispositif suivant l'une quelconque des revendications 1 à 5, caractérisé par le fait que le récipient principal (1) comporte dans sa paroi un hublot transparent et étanche (16) gradué pour permettre le repérage de la position du bord supérieur du récipient secondaire (9) à l'intérieur du récipient principal (1).

7. Dispositif suivant l'une quelconque des revendications 1 à 6, caractérisé par le fait qu'un dispositif à contact électrique est associé au récipient secondaire (9) pour permettre la signalisation de la position basse du récipient secondaire (9) dans le récipient principal (1), le récipient secondaire (9) reposant sur le fond du récipient principal (1).

8. Dispositif suivant l'une quelconque des revendications 1 à 7, caractérisé par le fait que l'installation hydraulique est une machine tournante dans laquelle circule de l'huile de lubrification.

9. Dispositif selon la revendication 8, caractérisé par le fait que la machine tournante est une pompe présentant un débit de fuite d'huile en fonctionnement.

## Patentansprüche

1. Abflußvorrichtung für eine erste Flüssigkeit in genau bemessener Menge, die einen Hauptbehälter (1), der die erste Flüssigkeit enthält und ein Überlaufrohr (2) aufweist, und einen zweiten Behälter (9) umfaßt, in den man eine zweite Flüssigkeit einfüllt und der im Inneren des Hauptbehälters (1) in der ersten Flüssigkeit schwimmend so montiert ist, daß er in der vertikalen Richtung frei beweglich ist, dadurch gekennzeichnet, daß die erste Flüssigkeit eine Flüssigkeit zum Wiederauffüllen eines hydraulischen Kreises mit einem Leck ist und daß die zweite Flüssigkeit die Leckflüssigkeit des hydraulischen Kreises ist, wobei das innere Volumen des zweiten Behälters in Verbindung mit einem Auslaßrohr (8) dieser Leckflüssigkeit steht, der zweite Behälter in der Flüssigkeit des Hauptbehälters auf einer Höhe (X), die von der Menge der vom zweiten Behälter (9) aufgefangenen Leckflüssigkeit abhängt, eingetaucht ist und das Eintauchen des zweiten Behälters (9) das Abfließen von Flüssigkeit zum Wiederauffüllen in den hydraulischen Kreis über das Überlaufrohr (2) in einer genau bemessenen Menge hervorruft.

2. Vorrichtung nach Anspruch 1, dadurch gekennzeichnet, daß der zweite Behälter (9) aus einem schwimmenden äußeren, in seinem oberen Bereich offenen Behälter (10) und einem inneren geschlossenen Ablaufbehälter (11) besteht, der im Inneren des schwimmenden Behälters (10) angeordnet ist und in Verbindung mit dem Auslaßrohr (8) steht.

3. Abflußvorrichtung nach einem der Ansprüche 1 und 2, dadurch gekennzeichnet, daß der zweite Behälter (9) um eine vertikale Säule (4), die am Hauptbehälter (1) befestigt ist, angeordnet ist.

4. Vorrichtung nach einem der Ansprüche 1 bis 3, dadurch gekennzeichnet, daß das Rohr (8) ein vertikales Rohr ist, das durch eine Öffnung durch die Wand des zweiten Behälters (9) hindurchgeführt ist.

5. Vorrichtung nach einem der Ansprüche 1 bis 4, dadurch gekennzeichnet, daß der Behälter (1) eine abnehmbare Abdeckhaube (5) aufweist, durch die das Auslaßrohr (8) hindurchgeführt ist und die dieses Rohr (8) trägt.

6. Vorrichtung nach einem der Ansprüche 1 bis 5, dadurch gekennzeichnet, daß der Hauptbehälter (1) in seiner Wand ein transparentes und abgedichtetes, mit Gradeinteilung versehenes Sichtfenster (16) ausweist, das die Einstellung der Position des oberen Randes des zweiten Behälters (9) im Inneren des Hauptbehälters (1) erlaubt

7. Vorrichtung nach einem der Ansprüche 1 bis 6, dadurch gekennzeichnet, daß eine Vorrichtung mit elektrischem Kontakt mit dem zweiten Behälter (9) verbunden ist, um die abgesenkte Position des zweiten Behälters (9) im Hauptbehälter (1), wenn der zweite Behälter (9) auf dem Boden des Hauptbehälters (1) ruht, anzeigen zu können.

8. Vorrichtung nach einem der Ansprüche 1 bis 7, dadurch gekennzeichnet, daß der hydraulische Kreis eine rotierende Maschine ist, in der Schmieröl umläuft.

9. Vorrichtung nach Anspruch 8, dadurch gekennzeichnet, daß die rotierende Maschine eine Pumpe ist, die während des Betriebs einen Ölleckagedurchsatz aufweist.

## Claims

1. Device for supplying a first fluid in a metered amount, comprising a main receptacle (1) containing the first fluid and having an overflow pipe (2) and a secondary receptacle (9) into which a second fluid is introduced, mounted so as to be freely movable in the vertical direction inside the main receptacle (1) and floating in the first fluid, characterised in that the first fluid is a topping-up liquid for a hydraulic installation suffering from a leak, the second fluid is the fluid leaking from the hydraulic installation, the inner space of the secondary receptacle communicating with a drainage pipe (8) for the leaking fluid, the secondary receptacle (9) being immersed in the fluid in the main receptacle to a level (X) dependent on the amount of lost fluid collected by the secondary receptacle (9), the immersion of the secondary receptacle (9) causing a metered quantity of the topping-up liquid to be fed into the hydraulic installation through the overflow pipe (2).

2. Device according to claim 1, characterised in that the secondary receptacle (9) consists of an outer floating receptacle (10) open at its top and a closed inner drainage receptacle (11), positioned inside the floating receptacle (10) and in communication with the drainage pipe (8).

3. Supply device according to claim 1 or 2, characterised in that the secondary receptacle (9) is positioned around a vertical column (4) attached rigidly to the main receptacle (1).

4. Device according to one of claims 1 to 3, characterised in that the pipe (8) is a vertical pipe passing through the wall of the secondary receptacle (9) via an aperture.

5. Device according to one of claims 1 to 4, characterised in that the receptacle (1) has a removable lid (5) traversed by the drainage pipe (8) and supporting this pipe (8).

6. Device according to one of claims 1 to 5, characterised in that the main receptacle (1) has in its wall a sealed transparent window (16), graduated so as to enable the position of the upper edge of the secondary receptacle (9) to be detected inside the main receptacle (1).

7. Device according to one of claims 1 to 6, characterised in that an electrical contact is attached to secondary receptacle (9) to enable the bottom position of the secondary receptacle (9) in the main receptacle (1) to be indicated, the secondary receptacle (9) resting on the bottom of the main receptacle (1).

8. Device according to any one of claims 1 to 7, characterised in that the hydraulic installation is a rotating machine in which lubricating oil circulates.

9. Device according to claim 8, characterised in that the rotating machine is a pump which operates with an oil leak.